(19) **Europäisches Patentamt / European Patent Office / Office européen des brevets**

(11) **EP 2 048 636 B1**

(12) **EUROPÄISCHE PATENTSCHRIFT**

(45) Veröffentlichungstag und Bekanntmachung des Hinweises auf die Patenterteilung:
**26.01.2011  Patentblatt 2011/04**

(51) Int Cl.:
*G08B 17/12* (2006.01)     *G01J 5/00* (2006.01)
*G01J 5/04* (2006.01)      *G01K 11/00* (2006.01)

(21) Anmeldenummer: **08105303.5**

(22) Anmeldetag: **11.09.2008**

(54) **Brandmelder**

Fire alarm

Dispositif d'alerte d'incendie

(84) Benannte Vertragsstaaten:
**DE FR GB**

(30) Priorität: **05.10.2007  DE 102007047706**

(43) Veröffentlichungstag der Anmeldung:
**15.04.2009  Patentblatt 2009/16**

(73) Patentinhaber: **ROBERT BOSCH GMBH**
**70442 Stuttgart (DE)**

(72) Erfinder:
• **Hasch, Juergen**
**70195 Stuttgart (DE)**
• **Waldschmidt, Christian**
**70197 Stuttgart (DE)**
• **Thiel, Michael**
**71229 Leonberg (DE)**

(56) Entgegenhaltungen:
**EP-A- 0 408 815     DE-A1- 3 147 775**
**US-A- 3 711 845**

• **F. ALIMENTI, S. BONAFONI, S. LEONE, V. MATTIOLI, V. PALAZZARI, G. TASSELLI, M. STRAPPINI, P. BASILI, L. ROSELLI: "Development of a Low-Cost Microwave Radiometer for the Early Detection of Fire in Forest Environments" PROCEEDINGS OF THE 36TH EUROPEAN MICROWAVE CONFERENCE, September 2006 (2006-09), Seiten 1497-1500, XP002518040 Manchester, UK**

Bemerkungen:
Die Akte enthält technische Angaben, die nach dem Eingang der Anmeldung eingereicht wurden und die nicht in dieser Patentschrift enthalten sind.

EP 2 048 636 B1

**Beschreibung**

Stand der Technik

Die Erfindung betrifft einen Brandmelder zum Einsatz in einem Brandmeldesystem, mit einer Temperatursensoreinheit zur Erfassung einer temperaturabhängigen Strahlung im Mikrowellenbereich eines potentiellen Brandherds und zur Erzeugung eines Temperatursignals, mit einer Auswerteeinrichtung zur Auswertung des Temperatursignals und mit einer Alarmauslösung zur Erzeugung eines Alarmsignals auf Basis der Auswertung.

Brandmelder werden vielfach zur Sicherung von privaten oder gewerblichen Gebäuden eingesetzt und weisen üblicherweise eine Temperatursensoreinheit oder eine Rauchsensoreinheit auf, die im Falle eines Brandes die entstehende Hitze bzw. den entstehenden Rauch detektieren. Die Grundlage für die Detektion von Brandemissionen bieten oftmals optische Verfahren, die Rauch aufgrund von Abschattung oder Abschwächung von Lichtsignalen erfassen, oder Temperaturmessverfahren, die eine Änderung einer Werkstoffeigenschaft aufgrund einer Temperaturänderung zur Grundlage haben. Derartige Brandmelder werden entweder als Stand-Alone-Versionen mit einer integrierten Sirene oder dergleichen oder in einem vernetzten Brandmeldesystem eingesetzt, wobei mehrere Brandmelder signaltechnisch miteinander vernetzt sind und gegebenenfalls über eine Brandmeldezentrale gesteuert werden.

Aus einem anderen technischen Bereich, nämlich die Überwachung von industriellen Prozessen sowie für wissenschaftliche Anwendungen, ist gemäß der Druckschrift US 2005/0053118 A1 eine Temperaturmessung auf Basis von Mikrowellen bekannt. Die Druckschrift DE 31 47 775 A1, die wohl den nächstliegenden Stand der Technik bildet, betrifft ein Verfahren zur Branderkennung oder Flammenüberwachung mittels eines Strahlungsmelders. Eine einfallende Mikrowellenstrahlung wird von einer Expotentialantenne aufgenommen, weiterverarbeitet und von einer Auswerteeinheit bewertet. Wird aufgrund der Auswertung ein Brand erkannt, so kann eine Alarmauslösung erfolgen.

Offenbarung der Erfindung

Erfindungsgemäß wird ein Brandmelder mit den Merkmalen des Anspruchs 1 vorgeschlagen. Bevorzugte oder vorteilhafte Ausführungsformen der Erfindung ergeben sich aus den Unteransprüchen, der nachfolgenden Beschreibung sowie den beigefügten Figuren.

Der Brandmelder gemäß der Erfindung ist zum Einsatz in einem Brandmeldesystem geeignet und/oder ausgebildet, welches insbesondere für die Verwendung in Industrieumgebungen eingerichtet ist. Bevorzugt weist der Brandmelder eine autarke Energieversorgung auf, so dass dieser auch bei einem Zusammenbruch eines stationären Energieversorgungsnetzes am Einsatzort aktiv bleibt.

Zur Ausgabe von Alarmsignalen weist der Brandmelder beispielsweise eine integrierte Sirene auf. Zur Weiterleitung von Alarmsignalen z. B. an eine Alarmzentrale umfasst der Brandmelder optional eine Schnittstelle, zum Beispiel eine Netzwerkschnittstelle, eine kabelgebundene und/oder eine kabellose Schnittstelle.

Der Brandmelder umfasst eine Temperatursensoreinheit mit der die temperaturabhängige Strahlung im Mikrowellenbereich eines potentiellen Brandherds berührungsfrei messbar ist und die auf Basis der gemessenen Strahlung ein Temperatursignal erzeugt. Die Strahlung im Mikrowellenbereich, insbesondere die Mikrowellenstrahlung, wird als eine elektromagnetische Strahlung vorzugsweise in einem Frequenzbereich von 0,3 GHz bis 300 GHz verstanden. Ein Brandherd steht vorzugsweise als Synonym für sämtliche mit ungewöhnlicher Hitze beaufschlagten Objekte. Das Temperatursignal wird in einer Auswerteeinrichtung ausgewertet, in Abhängigkeit der Auswertung wird eine Alarmeinrichtung angesteuert, die ein Alarmsignal erzeugt und beispielsweise über die Sirene oder die Schnittstelle ausgibt.

Erfindungsgemäß ist die Temperatursensoreinheit zur ortsaufgelösten Temperaturerfassung ausgebildet. Bei einer möglichen Ausführungsform umfasst die Temperatursensoreinheit eine scannende Antenneneinrichtung, also eine Antenneneinrichtung, die in Abhängigkeit der Zeit unterschiedliche Raumwinkel erfasst. Bei einer alternativen Ausführungsform wird der von einer Antenneneinrichtung erfasste Raumwinkelbereich über die Zeit, z.B. mittels Abschattungseinrichtungen, verändert. Bei beiden genannten Ausführungsformen werden die zeitabhängigen Signale ausgewertet und daraus eine Orts- oder Winkelinformationen über den Brandherd ermittelt.

Bei anderen Ausführungsformen umfasst der Brandmelder mindestens zwei Temperatursensoreinheiten und/oder Antenneneinrichtungen, wobei die Temperatursensoreinheiten und/oder Antenneneinrichtungen in unterschiedliche Raumwinkel gerichtet sind, um eine ortsaufgelöste Temperaturerfassung in dem Umgebungsbereich durchzuführen. Vorzugsweise sind die beobachteten Raumwinkel überlappend angeordnet.

Bei Weiterbildungen der Erfindung sind mehr als zwei Temperatursensoreinheiten und/oder Antenneneinrichtungen vorgesehen, die beispielsweise als Zeile oder Fläche, insbesondere als Array angeordnet sind, wobei deren Antennensignale bzw. Temperatursignale zu einer ortsaufgelösten Temperaturverteilung in der Überwachungsumgebung umgerechnet werden.

Diese letztgenannten Brandmelder weisen den Vorteil auf, dass neben der grundsätzlichen Information über die Existenz eines Brandherdes auch dessen Position feststellbar ist, so dass - gerade während eines Brands unter erschwerten Umgebungsbedingungen - Sicherungs- und/oder Löscharbeiten gezielt durchführbar sind. Beispielsweise kann eine Sprinkleranlage lokal bzw. selektiv aktiviert werden.

Die optional zu nutzenden Vorteile der Erfindung sind somit in der Unempfindlichkeit des zugrunde liegenden Messverfahrens gegenüber rauen Umgebungsbedingungen, beispielsweise bei Belastung durch Staub, Nebel oder Dunst; in der Möglichkeit des Durchdringens von Abdeckungen, wie Abdeckplanen oder Stellwänden aus Stoff, und somit der der Detektion von verdeckten Brandherden; in der Möglichkeit einer Spotmessung eines bestimmten Bereichs durch Wahl eines günstigen Antennendiagramms und in der Vermeidung der EMVU-Problematik aufgrund des passiven Verfahrens ohne vom Brandmelder ausgesendete elektromagnetische Wellen zu benötigen.

Eine Überlegung der Erfindung ist es, dass der Brandmelder durch die Verwendung einer Temperatursensoreinheit auf Basis von Mikrowellenstrahlungsmessung ein sehr robustes Betriebsverhalten zeigt, da selbst bei einer Verschmutzung des Brandmelders, wie es beispielsweise bei langen Einsatzzeiten aufgrund von Staubbelastung oder dergleichen kommen kann, die Funktionsfähigkeit nicht oder nahezu nicht eingeschränkt ist.

Unnötige und kostspielige Fehlalarme aufgrund einer Fehlinterpretation von Verschmutzungen als Brand werden dadurch minimiert bzw. ausgeschlossen. Etwaige Serviceintervalle des Brandmelders werden gegenüber konventionellen Systemen aufgrund der Störsicherheit des Messverfahrens deutlich verlängert. Trotz dieser Funktionsvorteile ermöglicht der erfindungsgemäße Brandmelder die zuverlässige Detektion von Bränden durch eine Temperaturmessung entfernter Objekte. Zudem ist auch die Detektion von verdeckten Brandherden, die zum Beispiel unter einer Abdeckplane oder hinter einer Stellwand ausbrechen, möglich, soweit die Verdeckung transparent für die Mikrowellenstrahlung ist.

Bei einer bevorzugten Ausführungsform der Erfindung ist die Temperatursensoreinheit als passiv messende Sensoreinheit ausgebildet, insbesondere sendet der Brandmelder keine Messstrahlen aus. Diese Ausführungsform führt neben der Energieersparnis im Betrieb und der verminderten Fehleranfälligkeit aufgrund der Minimierung der Anzahl von Bauteilen zu dem Vorteil, dass EMVU-Probleme (Elektromagnetische Umweltverträglichkeit) systembedingt ausgeschlossen sind.

Zur Erfassung der Mikrowellenstrahlung zeigt die Temperatursensoreinheit eine Antenneneinrichtung, die die Strahlung erfasst und in ein Antennensignal konvertiert. Die Antenneneinrichtung ist vorzugsweise für den Empfang im Mikrowellenbereich von 0,3 GHz bis 300 GHz mit einer Bandbreite von bevorzugt 1 MHz bis 10 GHz ausgebildet. Besonders bevorzugt ist die Antenneneinrichtung als Richtantenne realisiert, so dass eine bestimmte Raumrichtung bzw. ein bestimmter Raumwinkel ausgewählt werden kann. Insbesondere ist eine Spot-Messung eines bestimmten Bereichs der Industrieumgebung durch Wahl eines günstigen Antennendiagramms möglich. Besonders bevorzugt sind die Raumrichtungswinkel kleiner als 50°, vorzugsweise kleiner als 30° ausgebildet.

Bei einer bevorzugten Realisierung der Erfindung weist die Temperatursensoreinheit einen ersten Leistungsdetektor zur Konvertierung des Antennensignals in ein Messsignal auf. Hierbei wird die von der Antenneneinrichtung empfangene Rauschleistung $P_A$ in ein Messsignal umgesetzt. Zur Bildung eines Referenzsignals weist die Temperatursensoreinheit einen zweiten Leistungsdetektor auf, der vorzugsweise baugleich zu dem ersten Leistungsdetektor ausgebildet ist und der zur Konvertierung eines Rauschsignals einer Referenzrauschquelle ausgebildet ist. Die Referenzrauschquelle ist beispielsweise als ein auf Umgebungstemperatur temperierter Widerstand ausgebildet. Die Temperierung erfolgt dabei bevorzugt passiv, das heißt, die Referenzrauschquelle bzw. der Widerstand ist mit der Umgebung in einem thermischen Kontakt angeordnet. Der zweite Leistungsdetektor setzt somit die in der Referenzrauschquelle erzeugte Rauschleistung $P_0$ in ein Referenzsignal um.

Aus dem Referenzsignal und dem Messsignal wird von dem Brandmelder das Temperatursignal abgeleitet bzw. berechnet, indem die beiden Rauschleistungen bzw. das Messsignal und das Referenzsignal miteinander verglichen werden. Vorzugsweise sind erster und zweiter Leistungsdetektor im Signalweg parallel zueinander angeordnet.

Um eine kostengünstige Realisierung des Brandmelders sicherzustellen, sind erste und/oder der zweite Leistungsdetektor als integrierte Schaltungen ausgebildet. Diese können somit - im Gegensatz zu den früheren hochwissenschaftlichen Ausführungen von Mikrowellentemperatursensoren - in einer Massenfertigung produziert werden. Besonders bevorzugt ist es dabei, dass die beiden Leistungsdetektoren als eine gemeinsame Halbleiterschaltung, insbesondere Silizium-Germanium-Schaltung und/oder auf einem gemeinsamen Chip ausgebildet sind.

Somit sind die Signalwege von Antennensignal zum Messsignal bzw. vom Rauschsignal zum Referenzsignal parallel mit zwei vorzugsweise voneinander unabhängigen Leistungsdetektoren ausgebildet, die jedoch auf einem gemeinsamen Träger angeordnet sind. Durch die Anordnung auf dem gemeinsamen Träger ist sichergestellt, dass die beiden Leistungsdetektoren jederzeit auf dem gleichen oder zumindest auf einem nahezu gleichen Temperaturniveau liegen und Störquellen aufgrund von unterschiedlichen Temperaturen und somit beispielsweise unterschiedlicher Verstärkungsleistungen oder zusätzlichem Rauschen der Leistungsdetektoren nahezu ausgeschlossen sind. Nicht zuletzt ist die Integration der beiden Leistungsdetektoren auf einem gemeinsamen Chip ein weiterer Schritt, den Brandmelder kostengünstig fertigen zu können.

Bei einer bevorzugten Implementierung der Vorrichtung weist der Brandmelder einen Analog-Digital-Wandler (AD-Wandler) zur Wandlung des Referenzsignals und des Messsignals in digitale Signale auf. Die digitalen Signale werden bevorzugt durch einen Mikroprozessor weiterbearbeitet, wobei auf deren Basis die Berechnung einer absoluten Temperatur des potentiellen Brandherdes, einer relativen Temperatur oder eines Temperaturreferenzwertes als Temperatursignal erfolgt. Optional wird durch den Mikroprozessor das Temperatursignal zudem ausgewertet und/oder das Alarmsignal erzeugt bzw. ausgelöst.

Bei einer vereinfachten Ausbildung des Brandmelders wird nur eine Grenzwertüberwachung durchgeführt, so dass ein Alarmsignal ausgelöst wird, sobald das Verhältnis oder die Differenz zwischen Messsignal und Referenzsignal einen bestimmten, vorgegebenen Wert über- bzw. unterschritten haben.

Es führt zu einer weiteren Vergünstigung der Produktion des Brandmelders, wenn sowohl die beiden Leistungsdetektoren als auch der Analog-Digital-Wandler und der Mikrocontroller auf der gemeinsamen Halbleiterschaltung und/ oder auf dem gemeinsamen Chip ausgeführt sind.

Bei einer bevorzugten konstruktiven Ausführung der Erfindung weist der Brandmelder ein Gehäuse auf, welches einen Durchgangsbereich für die temperaturabhängige Strahlung zeigt, wobei der Durchgangsbereich staub- und/oder gasdicht ausgebildet ist. Bevorzugt ist der Durchgangsbereich für Licht im UV-/VIS- und/oder NIR-Wellenlängenbereich opak bzw. nur transluzent realisiert.

Kurze Beschreibung der Zeichnungen

Weitere Merkmale, Vorteile und Wirkungen der Erfindung ergeben sich aus der nachfolgenden Beschreibung eines bevorzugten Ausführungsbeispiels der Erfindung sowie der Figuren. Dabei zeigen:

Figur 1          ein Blockschaltbild eines Brandmelders als ein erstes Ausführungsbeispiel der Erfindung;
Figuren 2 a, b, c    drei mögliche Ausführungen der Antenneneinrichtung des Brandmelders in Figur 1.

Ausführungsform(en) der Erfindung

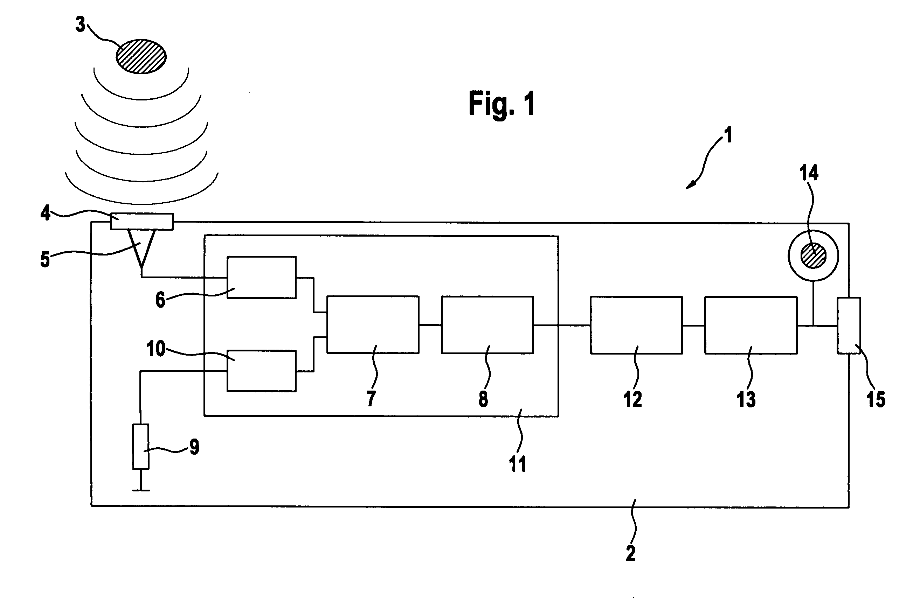

Die Figur 1 zeigt einen Brandmelder 1 als ein Ausführungsbeispiel der Erfindung in einer schematischen Blockdarstellung. Der Brandmelder 1 ist dazu ausgebildet, Mikrowellenstrahlung, welche von einem Brandobjekt 3 ausgesendet wird, zu detektieren und auszuwerten. Hinsichtlich der Theorie wird davon ausgegangen, dass die Leistung der von dem Brandobjekt 3 abgestrahlten Schwarzkörperstrahlung bzw. des thermischen Rauschens, insbesondere des "weißen thermischen Rauschens", nach folgender Formel berechenbar ist:

$$P_A = k \times T \times B,$$

wobei
k = Bolzmannkonstante (1,38·10$^{-23}$ Ws/K)
T = Temperatur in K
B = Bandbreite in Hz

In dem Brandmelder 1 wird die detektierte Rauschleistung $P_A$ des Brandobjekts 3 mit einer Referenz verglichen, um eine Information über die Temperatur des Brandobjekts 3 zu erhalten, wie nachfolgend noch erläutert wird.

Der Brandmelder 1 weist ein Gehäuse 2 auf, in das ein Messfenster 4, welches das Gehäuse 2 gegenüber der Umwelt staubdicht und/oder gasdicht abdichtet, jedoch transparent für die Mikrowellenstrahlung ist. Das Messfenster 4 ist als eingesetztes Fenster oder als einstückiger Bereich des Gehäuses 2 ausgebildet.

Hinter dem Messfenster 4 ist eine Antenneneinrichtung 5 positioniert, die die Mikrowellenstrahlung in einem Mikrowellenbereich zwischen 0,3 GHz und 300 GHz mit einer Bandbreite von 1 MHz bis 10 GHz empfängt. Durch Auslegung der Antenneneinrichtung 5 als eine Richtantenne kann eine bestimmte Raumrichtung zur Überwachung durch den Brandmelder 1 ausgewählt werden.

Die detektierte Mikrowellenstrahlung wird von der Antenneneinrichtung 5 als ein Antennensignal an einen ersten Leistungsdetektor 6 weitergegeben, welcher das Antennensignal in ein Messsignal umwandelt. Dieses Messsignal wird anschließend an einen Analog-Digital-Wandler 7 übergeben, der das Messsignal in ein digitales Signal konvertiert und an einen Mikrocontroller 8 zur Temperaturbestimmung weiterleitet.

Die Temperaturbestimmung in dem Mikrocontroller 8 erfolgt über den Vergleich des digitalen Werts des Messsignals und einem digitalen Wert eines Referenzsignals. Zur Erzeugung des Referenzsignals weist der Brandmelder 1 einen Widerstand 9 auf, welcher mit der Umgebung thermisch gekoppelt ist und dessen Rauschleistung $P_0$ über einen zweiten Leistungsdetektor 10 in gleicher Weise verstärkt wird wie das Antennensignal der Antenneneinrichtung 5 in dem ersten Leistungsdetektor 6. Das durch die Verstärkung erzeugte Referenzsignal wird an den gleichen oder einen weiteren Analog-Digital-Wandler 7 gegeben und ebenfalls als digitaler Wert dem Mikrocontroller 8 zur Verfügung gestellt. Die Signalwege des ersten Leistungsdetektors 6 und des zweiten Leistungsdetektors 10 sind parallel zueinander angeordnet. Aus der Differenz der digitalen Werte der empfangenen Leistung der Antenneneinrichtung 5 und des Referenzwiderstands 9 kann die Temperatur des Brandobjekts 3 ermittelt werden. Bevorzugt ist vorgesehen, dass der Widerstand 9 temperaturüberwacht ist.

Letztlich bilden die Komponenten erster Leistungsdetektor 6, zweiter Leistungsdetektor 10, Analog-Digital-Wandler 7 und Mikrocontroller 8 die Auswerteelektronik eines Radiometers 11, das die von der Referenz in der Umgebungstemperatur erzeugte Rauschleistung $P_0$ mit der von der Antenneneinrichtung 5 empfangenen Rauschleistung $P_A$ vergleicht. Die Temperaturauswertung berechnet den Temperaturunterschied zwischen dem Brandobjekt 3 und dem Widerstand 9 aufgrund der unterschiedlichen Rauschleistungen. Bei Überschreiten einer vorgebbaren Temperaturdifferenz von z. B. 60°C wird ein Alarm ausgelöst. Hierzu sind dem Mikrocontroller 8 eine Temperaturauswertung 12 und eine Alarmauslösung 13 nachgeschaltet, die diese Funktion übernimmt. Die Alarmauslösung erfolgt beispielsweise über eine interne oder externe Sirene 14 oder über eine Schnittstelle 15, wobei das Alarmsignal an ein übergeordnetes Überwachungssystem, insbesondere ein Brandmeldesystem weitergeleitet wird.

Bei einer Realisierung als Low-Cost-Brandmelder 1 ist zumindest die Auswerteelektronik 11 als integrierte Schaltung auf einem einzigen Chip ausgebildet. Eine Integration des Analog-Digital-Wandlers 7 und des Mikrocontrollers 8 auf derselben Halbleiterschaltung wie die Auswerteelektronik des Radiometers 11 bildet eine weitere bevorzugte Ausführungsform.

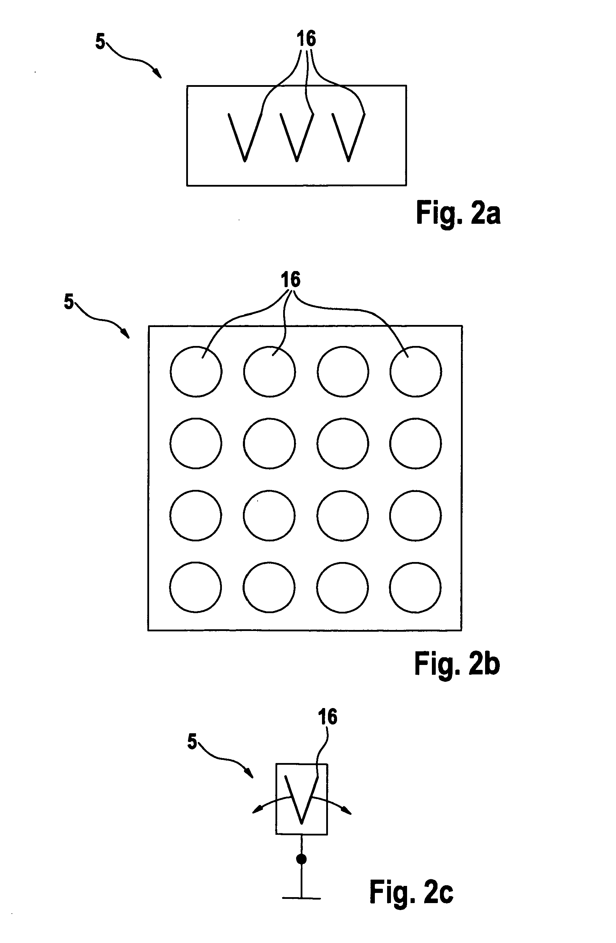

Die Figuren 2 a, b und c zeigen jeweils eine mögliche Ausführungsform der Antenneneinrichtung 5, die eine ortsaufgelöste Temperaturmessung ermöglicht.

Die Figur 2 a zeigt eine Ausführungsform, bei der drei Einzelantennen 16 als Zeile zusammengefasst sind, so dass die jeweils von den Einzelantennen 16 überwachten Raumwinkel überlappen. Durch gemeinsame Betrachtung der Messsignale der Einzelantennen 16 kann ein Hinweis auf die örtliche Position des Brandobjekts 3 ermittelt werden.

Die Figur 2 b zeigt ein zweidimensionales Array, wobei die Einzelantennen 16 regelmäßig in Spalten und Zeilen angeordnet sind. Alternative Ausführungsformen sind hier die Anordnung der Einzelantennen 16 in konzentrischen Ringen. Auch hier wird durch die gemeinsame Auswertung der Messsignale der Einzelantennen 16 eine Position des Brandobjekts 3 ermittelt.

Die Figur 2 c zeigt schließlich eine Ausführungsform der Antenneneinrichtung 5, wobei die Einzelantenne 16 bewegbar, insbesondere schwenkbar, angeordnet ist. Durch den zeitlichen Verlauf des Messsignals ist es hier möglich, eine Ortsinformation über das Brandobjekt 3 zu erhalten. Weitere Möglichkeiten bestehen darin, die Einzelantenne 16 stationär anzuordnen und den Empfangsraumwinkel beispielsweise durch temporäre Abschattungen oder dergleichen zeitlich zu verändern und aufgrund des daraus resultierenden zeitlichen Verlaufs des Messsignals die Position des Brandobjekts 3 zu bestimmen.

## Patentansprüche

1. Brandmelder (1) zum Einsatz in einem Brandmeldesystem mit einer Temperatursensoreinheit (5, 11) zur Erfassung einer temperaturabhängigen Strahlung im Mikrowellenbereich eines potentiellen Brandherds und zur Erzeugung eines Temperatursignals,
   mit einer Auswerteeinrichtung zur Auswertung des Temperatursignals (12) und
   mit einer Alarmauslösung (13) zur Erzeugung eines Alarmsignals auf Basis der Auswertung,
   **dadurch gekennzeichnet, dass**
   die Temperatursensoreinheit (5, 11) zu einer ortsaufgelösten Temperaturerfassung ausgebildet ist

2. Brandmelder (1) nach Anspruch 1, **dadurch gekennzeichnet, dass** die Temperatursensoreinheit (5) als passiv messende Sensoreinheit ausgebildet ist.

3. Brandmelder (1) nach Anspruch 1 oder 2, **dadurch gekennzeichnet, dass** die Temperatursensoreinheit eine Antenneneinrichtung (5) zur Erfassung von Mikrowellenstrahlung aufweist, wobei die Antenneneinrichtung (5) zur Konvertierung der erfassten Strahlung in ein Antennensignal ausgebildet ist.

4. Brandmelder (1) nach einem der vorhergehenden Ansprüche, **dadurch gekennzeichnet, dass** die Temperatursensoreinheit (5, 11) einen ersten Leistungsdetektor (6) zur Konvertierung des Antennensignals in ein Messsignal aufweist.

5. Brandmelder (1) nach einem der vorhergehenden Ansprüche, **dadurch gekennzeichnet, dass** die Temperatursensoreinheit (5, 11) einen zweiten Leistungsdetektor (10) zur Konvertierung eines Rauschsignals einer Referenzrauschquelle (9) in ein Referenzsignal aufweist.

6. Brandmelder (1) nach Anspruch 5, **dadurch gekennzeichnet, dass** die Referenzrauschquelle als ein auf Umgebungstemperatur temperierter Widerstand (9) ausgebildet ist.

7. Brandmelder (1) nach einem der vorhergehenden Ansprüche 5 oder 6, **dadurch gekennzeichnet, dass** der erste (6) und der zweite Leistungsdetektor (10) als integrierte Schaltungen ausgebildet und parallel zueinander verschaltet sind.

8. Brandmelder nach Anspruch 7, **dadurch gekennzeichnet, dass** die beiden Leistungsdetektoren (6, 10) als eine gemeinsamen Halbleitschaltung ausgebildet sind.

9. Brandmelder (1) nach einem der vorhergehenden Ansprüche, **gekennzeichnet durch** einen AD-Wandler (7) welcher zur Wandlung des Referenzsignals und des Messsignals in digitale Signale verschaltet ist.

10. Brandmelder (1) nach Anspruch 9, **gekennzeichnet durch** einen Mikroprozessor (8) zur Berechnung einer Temperatur oder eines Temperaturreferenzwerts als Temperatursignal aus den digitalen Signalen und/oder zur Auswertung des Temperatursignals und/oder zur Erzeugung des Alarmsignals.

11. Brandmelder (1) nach einem der vorhergehenden Ansprüche, **dadurch gekennzeichnet, dass** die beiden Leistungsdetektoren (6, 10), der AD-Wandler (7) und der Mikrokontroller (8) auf der gemeinsamen Halbleiterschaltung und/oder auf dem gemeinsamen Chip ausgeführt sind.

12. Brandmelder (1) nach einem der vorhergehenden Ansprüche, **gekennzeichnet durch** ein Gehäuse (2), welches einen Durchgangsbereich für die temperaturabhängige Strahlung aufweist, wobei der Durchgangsbereich staub- und/oder gasdicht ausgebildet ist.

## Claims

1. Fire alarm (1) for use in a fire alarm system, having a temperature sensor unit (5, 11) for detecting temperature-dependent radiation in the microwave range of a potential source of fire and for generating a temperature signal, having an evaluation device for evaluating the temperature signal (12), and having an alarm triggering means (13) for generating an alarm signal on the basis of the evaluation, **characterized in that** the temperature sensor unit (5, 11) is designed for spatially resolved temperature detection.

2. Fire alarm (1) according to Claim 1, **characterized in that** the temperature sensor unit (5) is in the form of a passively measuring sensor unit.

3. Fire alarm (1) according to Claim 1 or 2, **characterized in that** the temperature sensor unit has an antenna device (5) for detecting microwave radiation, the antenna device (5) being designed to convert the detected radiation into an antenna signal.

4. Fire alarm (1) according to one of the preceding claims, **characterized in that** the temperature sensor unit (5, 11) has a first power detector (6) for converting the antenna signal into a measurement signal.

5. Fire alarm (1) according to one of the preceding claims, **characterized in that** the temperature sensor unit (5, 11) has a second power detector (10) for converting a noise signal from a reference noise source (9) into a reference signal.

6. Fire alarm (1) according to Claim 5, **characterized in that** the reference noise source is in the form of a resistor (9) whose temperature is controlled to ambient temperature.

7. Fire alarm (1) according to either of the preceding Claims 5 and 6, **characterized in that** the first power detector (6) and the second power detector (10) are in the form of integrated circuits and are connected in parallel with one another.

8. Fire alarm according to Claim 7, **characterized in that** the two power detectors (6, 10) are in the form of a common semiconductor circuit.

9. Fire alarm (1) according to one of the preceding claims, **characterized by** an A/D converter (7) which is connected for the purpose of converting the reference signal and the measurement signal into digital signals.

10. Fire alarm (1) according to Claim 9, **characterized by** a microprocessor (8) for calculating a temperature or a temperature reference value as a temperature signal from the digital signals and/or for evaluating the temperature signal and/or for generating the alarm signal.

11. Fire alarm (1) according to one of the preceding claims, **characterized in that** the two power detectors (6, 10), the A/D converter (7) and the microcontroller (8) are formed on the common semiconductor circuit and/or on the common chip.

12. Fire alarm (1) according to one of the preceding claims, **characterized by** a housing (2) which has a passage region for the temperature-dependent radiation, the passage region being dustproof and/or gastight.

**Revendications**

1. Avertisseur d'incendie (1) destiné à être utilisé dans un système d'avertissement d'incendie et présentant une unité (5, 11) de détecteur de température qui détecte un rayonnement émis en fonction de la température dans la plage des microondes par un foyer potentiel d'incendie, et qui forme un signal de température, un dispositif d'évaluation qui évalue le signal de température (12) et le déclenchement (13) d'une alarme qui forme un signal d'alarme sur la base de l'évaluation, **caractérisé en ce que** l'unité (5, 11) de détecteur de température est configurée pour détecter la température avec résolution spatiale.

2. Avertisseur d'incendie (1) selon la revendication 1, **caractérisé en ce que** l'unité (5) de détecteur de température est configurée comme unité de détecteur à mesure passive.

3. Avertisseur d'incendie (1) selon la revendication 1 ou 2, **caractérisé en ce que** l'unité de détecteur de température présente un dispositif d'antenne (5) qui détecte le rayonnement de microondes, le dispositif d'antenne (5) étant configuré pour convertir le signal détecté en un signal d'antenne.

4. Avertisseur d'incendie (1) selon l'une des revendications précédentes, **caractérisé en ce que** l'unité (5, 11) de détecteur de température présente un premier détecteur de puissance (6) qui convertit le signal d'antenne en un signal de mesure.

5. Avertisseur d'incendie (1) selon l'une des revendications précédentes, **caractérisé en ce que** l'unité (5, 11) de détecteur de température présente un deuxième détecteur de puissance (10) qui convertit un signal de bruit d'une source (9) de bruit de référence en un signal de référence.

6. Avertisseur d'incendie (1) selon la revendication 5, **caractérisé en ce que** la source de bruit de référence est configurée comme résistance (9) maintenue à la température ambiante.

7. Avertisseur d'incendie (1) selon l'une des revendications 5 ou 6, **caractérisé en ce que** le premier (6) et le deuxième détecteur de puissance (10) sont configurés comme circuits intégrés et sont raccordés parallèlement l'un à l'autre.

8. Avertisseur d'incendie selon la revendication 7, **caractérisé en ce que** les deux détecteurs de puissance (6, 10) sont configurés sous la forme d'un circuit semi-conducteur commun.

9. Avertisseur d'incendie (1) selon l'une des revendications précédentes, **caractérisé par** un convertisseur A-N (7) qui est raccordé pour convertir le signal de référence et le signal de mesure en signaux numériques.

10. Avertisseur d'incendie (1) selon la revendication 9, **caractérisé par** un microprocesseur (8) qui calcule une température ou une valeur de référence de température comme signal de température à partir des signaux numériques, qui évalue le signal de température et/ou qui forme le signal d'alarme.

11. Avertisseur d'incendie (1) selon l'une des revendications précédentes, **caractérisé en ce que** les deux détecteurs de puissance (6, 10), le convertisseur A-N (7) et le microcontrôleur (8) sont réalisés sur le circuit semi-conducteur commun et/ou sur la puce commune.

**12.** Avertisseur d'incendie (1) selon l'une des revendications précédentes, **caractérisé par** un boîtier (2) qui présente une zone de passage pour le rayonnement dépendant de la température, la zone de passage étant configurée de manière à être étanche à la poussière et/ou aux gaz.

**Fig. 1**

EP 2 048 636 B1

5

16

**Fig. 2a**

5

16

**Fig. 2b**

16

5

**Fig. 2c**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050053118 A1

- DE 3147775 A1